# FASCICULE DE BREVET EUROPEEN

(11) **EP 2 576 208 B1**
(45) Date de publication et mention de la délivrance du brevet: **16.04.2014**
(21) Numéro de dépôt: 11721066.6
(22) Date de dépôt: 24.05.2011
(51) Int. Cl.: B32B 5/26, B65D 81/38, B32B 1/00

(54) **CONTENANT ISOLANT**
ISOLIERTER BEHÄLTER
INSULATED CONTAINER

(30) Priorité: 27.05.2010 FR 1002238
(43) Date de publication de la demande: 10.04.2013
(73) Titulaire: Carlo Sacchettini Import (C.S.I.), 4400 Nantes (FR); Société Picard Surgelés, 77300 Fontainebleau (FR)
(72) Inventeur: SACCHETTINI, Carlo, F-44490 Le Croisic (FR)
(74) Mandataire: Descamps, Cécile
(86) Numéro de dépôt international: PCT/EP2011/058501
(87) Numéro de publication internationale: WO 2011/147847

(56) Documents cités:
- EP-A1- 1 291 283
- WO-A1-2010/049927
- FR-A1- 2 219 002

## Description

### 1. Domaine de l'invention

L'invention concerne le domaine des contenants, notamment celui des contenants dits isolants, ayant une efficacité thermique, parfois appelés isothermes ; Ce type de contenant est agencé pour conserver un contenu, par exemple un produit alimentaire ou à ingérer, réfrigéré ou congelé ou encore surgelé disposé à l'intérieur du contenant à une température basse le plus longtemps possible, malgré une température extérieure supérieure.

### 2. Solutions de l'art antérieur

On connaît un grand nombre de contenants isolants en matière souple parfois appelés glacières comportant des matériaux plastiques ou synthétiques pour conserver des aliments à basse température, les aliments étant réfrigérés ou congelés ou encore surgelés.

Un inconvénient de ces contenants est qu'ils ne sont généralement pas suffisamment respectueux de l'environnement.

Un autre inconvénient de ce type de contenants est qu'ils n'ont généralement pas une grande durée de vie, étant souvent insuffisamment solides.

On connaît par ailleurs des contenants en fibres naturelles telles que du coton, respectueux de l'environnement, mais dont le pouvoir isotherme ou isolant est insuffisant pour contenir à température ambiante, parfois élevée, un ou des produits alimentaires réfrigérés, surgelés ou congelés en le maintenant dans cet état pour une durée jugée satisfaisante, notamment pour permettre le transport du ou des produits sans rupture de la chaîne du froid.

### 3. Objectifs de l'invention

L'invention a donc notamment pour objectif de pallier tout ou partie de ces inconvénients de l'art antérieur.

Plus précisément, l'invention a pour objectif de fournir un contenant solide, ayant une efficacité thermique, notamment un pouvoir isotherme ou isolant suffisant et pour autant respectueux de l'environnement.

L'invention a notamment pour objectif de fournir un contenant isolant permettant le transport d'un ou de plusieurs produits alimentaires ou à ingérer réfrigérés, congelés ou surgelés sans rupture de la chaîne de froid pendant une durée suffisante, par exemple comprise entre 30 min et 1h30.

### 4. Exposé de l'invention

L'invention y parvient grâce à un contenant isolant selon la revendication 1

Grâce à l'invention, le contenant a une efficacité thermique satisfaisante tout en utilisant des matériaux à base de fibres naturelles, respectueux de l'environnement.

En effet, le premier matériau comprend du jute qui est une fibre naturelle et le deuxième matériau comprend également une fibre naturelle.

Grâce à l'invention également, un consommateur peut transporter dans le contenant isolant selon l'invention un ou plusieurs produits alimentaires ou à ingérer réfrigérés, congelés ou surgelés sans rupture de la chaîne de froid pendant une durée suffisante, par exemple comprise entre 30 min et 1h30 environ.

Le contenant selon l'invention peut être apte à être lavé, par exemple dans une machine à laver. Le contenant selon l'invention peut être agencé pour être réutilisé. Le contenant selon l'invention peut comporter au moins une paroi souple, c'est-à-dire non rigide.

Les deuxième et troisième matériaux peuvent comprendre la même fibre naturelle, notamment avec une densité similaire ou différente.

Par exemple, une couche extérieure du contenant peut comprendre un matériau d'une densité plus élevée qu'une couche intérieure du contenant, laquelle comprend ainsi une densité moins élevée par exemple.

Le deuxième matériau et/ou le troisième matériau peuvent comprendre une fibre naturelle choisie dans le groupe constitué par : le coton, la soie, le lin, le chanvre et la laine.

Le premier matériau peut consister en de la toile de jute.

Au moins une des couches, notamment une couche extérieure du contenant, peut être revêtue d'une couche d'un polymère, notamment d'une couche de polyéthylène, qui peut être par exemple collée sur la couche extérieure.

Au moins une couche, par exemple la couche extérieure, peut être laminée avant un éventuel collage d'une couche de polymère formant un revêtement du contenant.

La présence d'une couche de polymère formant revêtement du contenant peut permettre d'imperméabiliser le contenant et de lui conférer une certaine rigidité.

Le premier matériau peut être disposé en une seule couche, d'une densité pouvant être sensiblement égale à 250 g/m². En variante, le premier matériau peut être disposé en plusieurs couches, par exemple en deux couches, chaque couche pouvant avoir une densité inférieure à 250 g/m², par exemple une densité égale à environ 125 g/m².

Le contenant peut comprendre par exemple une couche intérieure du deuxième matériau comprenant du coton d'une densité sensiblement égale à 110 g/m², deux couches centrales du premier matériau comprenant du jute chacune étant d'une densité sensiblement égale à 125g/m² et une couche extérieure du troisième matériau comprenant du coton d'une densité sensiblement égale à 240 g/m², notamment à 5% près environ.

Le contenant selon l'invention peut comprendre un organe de fermeture, tel qu'une fermeture à glissière et/ou fermeture dite à scratchs.

Le contenant selon l'invention peut comprendre des moyens de préhension et/ou de portage, tels qu'une poignée.

Le contenant peut être choisi dans le groupe constitué par : un sac dit isotherme, un porte-bouteille, et tout emballage ou contenant servant à conserver la chaîne du froid durant une période bien déterminée, par exemple une période comprise entre 30 min et 1h30 environ.

Le contenant peut être réalisé de manière à être souple, par exemple pour pouvoir être plié.

### 5. Liste des figures

D'autres caractéristiques et avantages de l'invention apparaîtront plus clairement à la lecture de la description suivante de modes de réalisation de l'invention, donnés à titre d'exemples illustratifs et non limitatifs et du dessin annexé dans lequel :
- la figure 1 représente un premier exemple de contenant conforme à l'invention, de manière schématique, en perspective,
- la figure 2 est une vue en coupe transversale schématique et partielle des parois du contenant de la figure 1,
- la figure 3 est une vue en coupe transversale schématique et partielle des parois d'un deuxième exemple de contenant conforme à l'invention,
- la figure 4 est un graphe schématique de la température en fonction du temps, tracé lors d'un test portant sur le contenant du premier exemple à température ambiante de 20°C et sur un contenant de l'art antérieur,
- la figure 5 est un graphe similaire à celui de la figure 4, à une température ambiante de 35°C, et
- la figure 6 illustre un autre exemple de contenant conforme à l'invention, de manière schématique, en perspective.

### 6. Description détaillée de modes de réalisation de l'invention

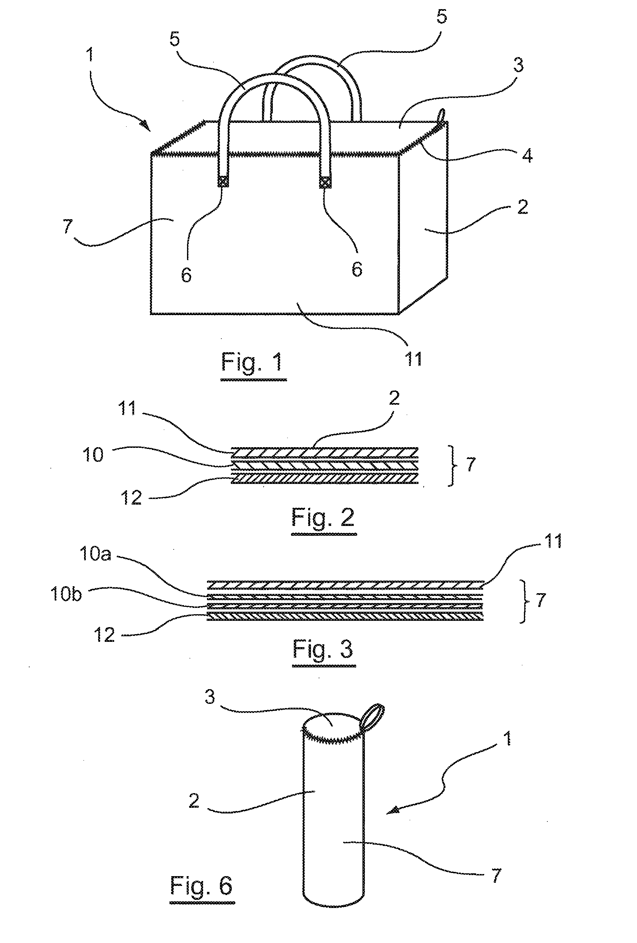

On a représenté sur la figure 1 un exemple de contenant 1 conforme à l'invention, présentant un pouvoir isolant. Le contenant 1 consiste, dans cet exemple, en un sac de forme sensiblement parallélépipédique comprenant une poche 2 et un couvercle 3 et comportant une pluralité de parois 7. Le sac peut être fermé à l'aide d'une fermeture à glissière 4 s'étendant sur trois des quatre côtés du couvercle 3 de manière à améliorer l'isolation de l'intérieur du sac. Le contenant 1 comporte également deux poignées 5 cousues par leurs extrémités inférieures 6 à la poche 2.

Le contenant 1 peut contenir un ou plusieurs produits alimentaires ou autres, notamment réfrigérés, congelés ou surgelés, pour une masse totale comprise entre 0 et 10 kg par exemple.

Sur la figure 2, on a représenté la composition des parois 7 de la poche 2 et du couvercle 3.

Dans l'exemple illustré, ces parois 7 se composent de trois couches superposées les unes aux autres, en l'occurrence une couche centrale 10 d'un premier matériau, une couche extérieure 11 d'un deuxième matériau, et une couche intérieure 12 d'un troisième matériau. La couche extérieure 11 est celle qui est visible depuis l'extérieur du sac tandis que la couche intérieure 12 est la couche visible à l'intérieur du sac. Enfm, la couche centrale 10 n'est pas visible, dans l'exemple illustré.

L'ensemble des couches constituant les parois 7 du contenant 1 comprennent des fibres naturelles. La couche centrale 10 comprend du jute, par exemple de la toile de jute. Les couches extérieure 11 et intérieure 12 peuvent comprendre un même matériau ou des matériaux différents. Les deuxième et troisième matériaux peuvent être choisis par exemple parmi le coton, la soie, le lin, ou tout autre fibre naturelle, telle que le chanvre, la laine.

Dans l'exemple illustré, la couche extérieure 11 est réalisée en coton, de même que la couche intérieure 12. Les densités des couches extérieure 11 et intérieure 12 sont, dans cet exemple, différentes, la couche extérieure 11 étant plus dense que la couche intérieure 12.

La couche intérieure 12, pouvant être nommée doublure, présente une densité d'environ 110 g/m². La couche extérieure 11 présente une densité d'environ 240g/m². Enfin, la couche centrale 10 présente une densité d'environ 250 g/m².

Dans l'exemple illustré, les poignées 5 sont réalisées dans le même matériau que la couche extérieure 11, mais il peut en être autrement sans sortir du cadre de l'invention.

Les couches des parois 7 sont, dans l'exemple illustré, non collées mais seulement cousues ensemble aux coutures du contenant 1.

Dans une variante non illustrée, des couches intérieure et extérieure peuvent être de même densité et/ou de matériaux différents.

Dans une autre variante non illustrée, au moins l'une des couches peut être revêtue par exemple d'un imperméabilisant, d'une peinture ou autre. Une couche de polymère, par exemple de polyéthylène, peut par exemple être collée sur l'une des couches, notamment sur la couche extérieure 11, à l'extérieur de celle-ci, formant un revêtement du contenant 1, lui conférant rigidité et imperméabilisation.

Dans l'exemple illustré sur les figures 1 et 2, la couche centrale 10 est constituée d'une seule couche, mais elle peut être formée de plusieurs couches sans sortir du cadre de l'invention. On a ainsi représenté sur la figure 3 les parois d'un deuxième exemple de contenant 1 similaire à celui des figures 1 et 2, mais comprenant une couche centrale 10a et une couche centrale 10b, chacune des couches 10a et 10b présentant, dans cet exemple, une densité égale à environ 125 g/m².

On a représenté sur la figure 6 un autre type de contenant 1 conforme à l'invention de forme sensiblement cylindrique, consistant dans cet exemple en un porte-bouteille présentant des propriétés isolantes avec des parois 7 d'une poche 2 et d'un couvercle 3, comme dans l'exemple des figures 1 et 2.

### 7. Exemples

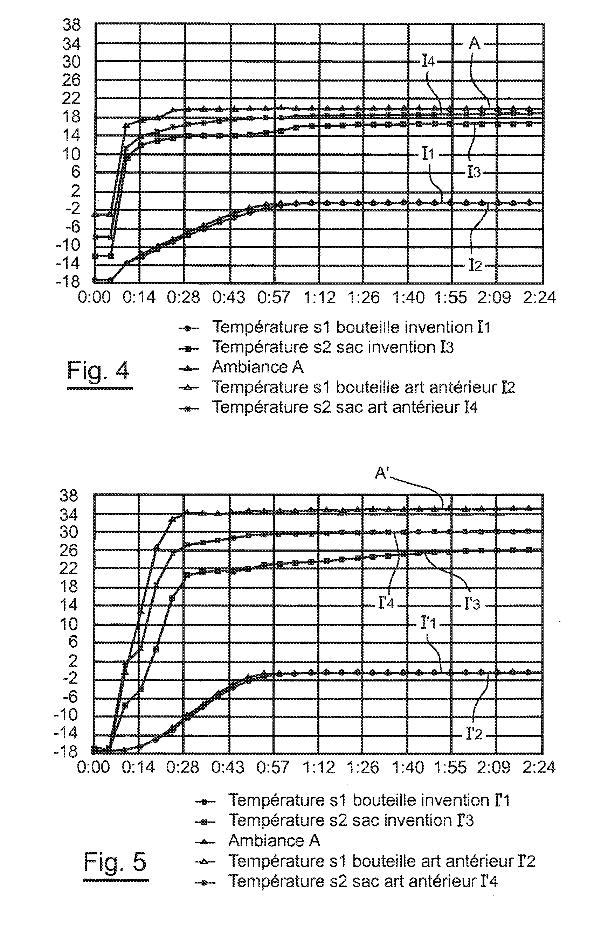

Pour mesurer les propriétés isothermes du contenant 1 conforme à l'invention, on a réalisé les essais suivants, dont les résultats sont illustrés sur les graphes des figures 4 et 5 commentés ci-après. L'objectif des essais réalisés est d'évaluer comparativement l'efficacité thermique d'un contenant conforme à l'invention et d'un sac de l'art antérieur.

### Premier essai:

Le contenant, ou sac, de l'art antérieur présente les caractéristiques suivantes

### Matière extérieure 100% polyester 300 D , doublure « tarpaulin ».

Le contenant 1 testé en comparaison est conforme au premier exemple décrit plus haut en regard des figures 1 et 2 et comporte trois couches, une couche extérieure coton, densité 240 g/m², une couche centrale unique en jute de densité 250g/m² et une couche intérieure coton, densité 110g/m².

On prend deux bouteilles d'eau qui vont servir de produits surgelés témoins. On aménage au centre du bouchon de chaque bouteille un trou de 4 mm de diamètre.

Chaque bouteille est équipée d'une sonde de température permettant le suivi de son réchauffement tout au long de l'essai. Ces sondes sont placées en position centrale à 5 cm du fond de la bouteille.

Une autre sonde est fixée sur le pourtour de chaque bouteille suivant le sens de la longueur à une distance de 5 cm du fond. Deux autres sondes sont laissées libres dans une enceinte climatique, dans laquelle sont placées les bouteilles.

Les fils de connexion des sondes de température passent par les ouvertures spécialement aménagées de part et d'autre de l'enceinte climatique.

On remplit les bouteilles d'une quantité précise de 900 ml d'eau distillée et on les positionne en position verticale au centre de l'enceinte climatique sur un plateau adapté, chacune dans un contenant, l'une dans le contenant conforme à l'invention, l'autre dans le contenant de l'art antérieur. On vérifie le bon positionnement des sondes au centre des bouteilles.

Après fermeture hermétique de l'enceinte, on réfrigère l'enceinte à une température de -18°C avec 0 % d'humidité relative pendant une durée d'au moins 24 heures de manière à assurer la solidification complète de l'eau.

On met sous tension la station de mesure des températures. On met alors l'enceinte à une température ambiante de 20°C dans ce premier essai, avec 65% d'humidité relative. On réalise une mesure avec les cinq sondes disponibles toutes les cinq minutes environ.

On relève les températures pendant une durée de 2 h 24 min dans cet essai à partir du changement de consignes de régulation, c'est-à-dire le changement de température et d'humidité.

A la fm de l'essai, on représente l'évolution des différentes températures en fonction du temps et on obtient le graphe de la figure 4.

Sur ce graphe présentant la température (exprimée en °C) en fonction du temps (exprimé en h) de la figure 4, on voit plusieurs courbes enregistrées. On note tout d'abord une courbe A de la température ambiante. On remarque ensuite une courbe I₁ de la température à l'intérieur de la bouteille installée dans le contenant 1 conforme à l'invention, une courbe I₂ de la température à l'intérieur de la bouteille contenue dans un sac de l'art antérieur. Enfin, on voit une courbe I₃ de la température à l'intérieur du contenant 1 conforme à l'invention et une courbe I₄ de la température intérieure du sac de l'art antérieur.

Comme on peut le constater à la lecture de ce graphe, le pouvoir isolant du contenant 1 conforme à l'invention est sensiblement égale voire supérieure à celle du sac de l'art antérieur. En effet, la température dans le contenant conforme à l'invention (courbe I₃) reste inférieure à celle à l'intérieur du sac de l'art antérieur (courbe I₄), sur toute la durée du test.

### Deuxième essai:

On effectue un deuxième essai dont les résultats sont illustrés sur la figure 5 sous forme d'un graphe de température (exprimée en °C) en fonction du temps (exprimé en h). Le protocole du deuxième essai est le même que celui du premier essai si ce n'est que la température d'ambiance pour la mesure des températures est fixée à 35°C avec 65 % d'humidité relative.

Le graphe de la figure 5 comporte les courbes A' de la température ambiante, I₁' de la température à l'intérieur de la bouteille installée dans le contenant 1 conforme à l'invention, I₂' de la température à l'intérieur de la bouteille contenue dans un sac de l'art antérieur, I₃' de la température à l'intérieur du contenant 1 conforme à l'invention et I₄' de la température intérieure du sac de l'art antérieur.

De même que sur le graphe illustré sur la figure 4, on constate sur le graphe de la figure 5 que les courbes de température à l'intérieur du sac sont à nouveau une preuve du pouvoir isolant du contenant 1 conforme à l'invention qui est au moins aussi important voire, comme illustré, plus important que celui du contenant isolant de l'art antérieur. En effet, on peut constater que la température qui règne à l'intérieur du contenant 1 conforme à l'invention (courbe I₃') est sensiblement inférieure à la température qui règne dans le sac de l'art antérieur (courbe I₄'), pendant tout le test.

L'invention n'est bien sûr pas limitée aux exemples qui viennent d'être décrits.

En particulier, les parois 7 du sac 2 et du couvercle 3 peuvent comprendre plus de trois couches sans sortir du cadre de l'invention. Par exemple, le contenant peut comprendre plusieurs couches de jute, au moins deux comme illustré sur la figure 3, ou plus.

On ne sort pas non plus du cadre de l'invention si les parois 7 du contenant 1 sont constituées uniquement de deux couches, à savoir une couche d'un premier matériau comprenant du jute et une couche d'un deuxième matériau, située à l'extérieur ou à l'intérieur du sac et comprenant une fibre naturelle.

Le contenant 1 peut être entièrement réalisé avec les parois 7 ou, en variante, seulement une partie du contenant peut être réalisée avec les différentes couches constituant les parois 7.

Le contenant peut ne pas être fermé par une fermeture, par exemple par une fermeture de type à glissière.

On ne sort pas du cadre de l'invention si le contenant 1 présente une forme différente que celles qui sont illustrées, s'il n'a pas de poignées ou si celles-ci se présentent d'une manière différente.

Un collage entre différentes couches constitutives des parois peut être effectué par exemple après lamination de chaque couche ou de l'ensemble des couches. Le collage peut être seulement effectué entre deux couches, par exemple entre la couche extérieure et une couche de polymère formant le revêtement extérieur du contenant. Le collage peut être effectué sur une partie de la surface des couches, ou sur la totalité de cette surface.

Dans toute la description, les expressions «comportant un » ou « comprenant un » doivent être comprises comme étant synonymes respectivement des expressions « comportant au moins un » et « comprenant au moins un », sauf si le contraire est spécifié.

Les plages de valeurs indiquées sont comprises comme incluant les bornes, sauf si le contraire est spécifié.

## Revendications

1. Contenant (1) isolant comportant au moins une paroi (7) comprenant au moins une couche d'un premier matériau comprenant du jute, au moins une couche d'un deuxième matériau comprenant une fibre naturelle et au moins une couche d'un troisième matériau comprenant une fibre naturelle, la couche du premier matériau étant emprisonnée entre au moins une couche du deuxième matériau et au moins une couche du troisième matériau, les premier, deuxième et troisième matériaux étant réalisés en tissé.

2. Contenant selon la revendication 1, dans lequel les deuxième et troisième matériaux comprennent la même fibre naturelle, notamment avec une densité similaire ou différente.

3. Contenant selon l'une des revendications 1 et 2, dans lequel le deuxième matériau et/ou le troisième matériau comprennent une fibre naturelle choisie dans le groupe constitué par : le coton, la soie, le lin, le chanvre et la laine.

4. Contenant selon l'une quelconque des revendications précédentes, comprenant au moins deux couches du premier matériau comprenant du jute.

5. Contenant selon l'une quelconque des revendications précédentes, dans lequel au moins une des couches est revêtue d'une couche d'un polymère.

6. Contenant selon la revendication 5, dans lequel ladite au moins une couche revêtue d'une couche d'un polymère est une couche extérieure (11) du contenant.

7. Contenant selon l'une des revendications 5 et 6, dans lequel le polymère comprend du polyéthylène.

8. Contenant selon l'une quelconque des revendications précédentes, comprenant une couche intérieure (12) du deuxième matériau comprenant du coton d'une densité sensiblement égale à 110 g/m², deux couches centrales (10a, 10b) du premier matériau comprenant du jute chacune étant d'une densité sensiblement égale à 125g/m² et une couche extérieure (11) du troisième matériau comprenant du coton d'une densité sensiblement égale à 240 g/m².

9. Contenant selon l'une quelconque des revendications précédentes, dans lequel le contenant est choisi dans le groupe constitué par : un sac dit isotherme, un porte-bouteille.

## Patentansprüche

1. Isolierbehälter (1), umfassend wenigstens eine Wand (7), die wenigstens eine Schicht aus einem Jute umfassenden ersten Material, wenigstens eine Schicht aus einem eine Naturfaser umfassenden zweiten Material und wenigstens eine Schicht aus einem eine Naturfaser umfassenden dritten Material umfasst, wobei die Schicht aus dem ersten Material zwischen wenigstens einer Schicht aus dem zweiten Material und wenigstens einer Schicht aus dem dritten Material eingeschlossen ist, wobei das erste, das zweite und das dritte Material aus Gewebe gefertigt sind.

2. Behälter nach Anspruch 1, wobei das zweite und das dritte Material die gleiche Naturfaser, insbesondere mit einer ähnlichen oder unterschiedlichen Dichte, umfassen.

3. Behälter nach einem der Ansprüche 1 und 2, wobei das zweite Material und/oder das dritte Material eine Naturfaser, welche aus der Gruppe bestehend aus Baumwolle, Seide, Leinen, Hanf und Wolle ausgewählt ist, umfassen.

4. Behälter nach einem der vorhergehenden Ansprüche, umfassend wenigstens zwei Schichten aus dem Jute umfassenden ersten Material.

5. Behälter nach einem der vorhergehenden Ansprüche, wobei wenigstens eine der Schichten mit einer Schicht aus einem Polymer überzogen ist.

6. Behälter nach Anspruch 5, wobei die wenigstens eine mit einer Schicht aus einem Polymer überzogene Schicht eine Außenschicht (11) des Behälters ist.

7. Behälter nach einem der Ansprüche 5 und 6, wobei das Polymer Polyethylen umfasst.

8. Behälter nach einem der vorhergehenden Ansprüche, umfassend eine Innenschicht (12) aus dem Baumwolle umfassenden zweiten Material mit einer Dichte von im Wesentlichen gleich 110 g/m², zwei mittlere Schichten (10a, 10b) aus dem Jute umfassenden ersten Material, die jeweils eine Dichte von im Wesentlichen gleich 125 g/m² aufweisen, sowie eine Außenschicht (11) aus dem Baumwolle umfassenden dritten Material mit einer Dichte von im Wesentlichen gleich 240 g/m².

9. Behälter nach einem der vorhergehenden Ansprüche, wobei der Behälter aus der Gruppe bestehend aus einer sogenannten Isoliertasche und einem Flaschenträger ausgewählt ist.

## Claims

1. Insulating container (1) comprising at least one wall (7) comprising at least one layer of a first material comprising jute, at least one layer of a second material comprising a natural fibre, and at least one layer of a third material comprising a natural fibre, the layer of the first material being trapped between at least one layer of the second material and at least one layer of the third material, the first, second and third materials being woven.

2. Container according to claim 1, wherein the second and third materials comprise the same natural fibre, in particular with a similar or different density.

3. Container according to one of claims 1 and 2, wherein the second material and/or the third material comprise a natural fibre selected from the group constituted by: cotton, silk, linen, hemp and wool.

4. Container according to any one of the preceding claims, comprising at least two layers of the first material comprising jute.

5. Container according to any one of the preceding claims, wherein at least one of the layers is covered with a layer of a polymer.

6. Container according to claim 5, wherein the said at least one layer covered with a layer of a polymer is an outer layer (11) of the container.

7. Container according to one of claims 5 and 6, wherein the polymer comprises polyethylene.

8. Container according to any one of the preceding claims, comprising an inner layer (12) of the second material comprising cotton with a density substantially equal to 110 g/m², two central layers (10a, 10b) of the first material comprising jute, each with a density substantially equal to 125 g/m², and an outer layer (11) of the third material comprising cotton with a density substantially equal to 240 g/m².

9. Container according to any one of the preceding claims, wherein the container is selected from the group constituted by: a so-called cool bag, or a bottle holder.
